# EUROPEAN PATENT APPLICATION

(11) **EP 0 858 198 A2**
(43) Date of publication of application: **12.08.1998**
(21) Application number: 98101891.4
(22) Date of filing: 04.02.1998
(51) Int. Cl.: H04L 29/06

(54) **A communication control unit and a communication control method**

(30) Priority: 05.02.1997 JP 22988/97
(71) Applicant: NEC CORPORATION, Tokyo (JP)
(72) Inventor: Ishii, Kenichi, Minato-ku, Tokyo (JP); Osawa, Tomoki, Minato-ku, Tokyo (JP)
(74) Representative: Baronetzky, Klaus, Dipl.-Ing.

(57) **Abstract**

A communication control unit that can perform a protocol process based on an arbitrary communications protocol in a communication system. The communication control unit comprises a CPU for implementing a protocol process based on an arbitrary communication protocol and a frame detection processing circuit for setting the bit length and the bit pattern of a frame detection signal, and the number of coincidence detection bits, based on the communication protocol and under control of the CPU.

## Description

### BACKGROUND OF THE INVENTION

The present invention relates to a communication control unit and a communication control method each which can carry out a protocol process without being limited to routine communications protocols.

Conventionally, communication equipment including a communication control unit is designed as a particular device in a communication system. The communication protocol process and the frame detection process in the communication control device are implemented by means of a hardware. Communication systems respectively implement different communication protocol processes and employ different frame detection signals. Hence, the communication control device designed for a specific communication system cannot be applied to another communication system.

Japanese patent Publication No. 010977/1989 regarding "Communication Adopter" discloses the art of realizing a communication control unit that can deal with plural communication control processes.

In this communication adopter which includes a communication process circuit that receives an instruction signal via a control bus. a desired protocol is selected among an asynchronous protocol, a binary synchronous protocol and a SDLC/HDLC protocol to perform data transmission. The communication adopter performs a communication protocol operation by using clock signals internally generated therein.

The configuration of the above-mentioned communication adopter can select plural communication protocols by an external instruction signal. However, since only communication protocols previously incorporated can be restrictively selected, communications cannot be established by using a desired communication protocol.

In order to detect a frame in an asynchronous communication mode and to establish a frame synchronization in a synchronous communication mode, it is needed to detect a specific bit pattern called a unique word in a receive signal. However, the bit length and the bit pattern of the unique word depend on the communication system. In order to deal with an arbitrary communication system, it is needed to set the bit length and the bit pattern of the unique word arbitrarily. However, the above-mentioned communication adopter cannot arbitrarily deal with the unique word.

The communication protocols must be processed based on data receive time and data transmission time of a modem. However, since the communication protocol is processed using clock signals previously prepared in the communication adopter, the protocol process cannot be implemented according to arbitrary clock signals which are transmitted or received by the modem.

### SUMMARY OF THE INVENTION

The present invention is made to solve the above-mentioned problems. The objective of the present invention is to provide a communication control unit applicable to an arbitrary communications protocol and an arbitrary communication system.

Another objective of the present invention is to provide a communication control method.

The objective of the present invention is achieved by a communication control unit comprising a built-in CPU for implementing a process regarding a communications protocol, and a frame detection processing circuit that can be set based on the bit length and the bit pattern of a frame detection signal, and the number of coincidence detection bits, under control of the CPU.

According to the present invention, the communication control unit implements a process regarding a communications protocol by externally reading a communication protocol program into a built-in CPU. The communication control unit have a frame detection processing circuit that can set the bit length and the bit pattern of a frame detection signal, and the number of coincidence bits by means of the built-in CPU.

According to the present invention, the frame detection circuit comprises an n-stage shift register having an arbitrary bit width (n); a unique word register having an n-bit width for setting a bit pattern for coincidence detection; a unique word mask register having an n-bit width for setting a bit location for no coincidence detection; a threshold register for writing the number of bits for coincidence detection; and a coincidence detection circuit for implementing a coincidence detection operation according to an output signal from said shift register, an output signal from said unique word register, an output signal from said unique word mask register and an output signal from said threshold register and then outputting a coincidence detection signal.

Moreover, according to the present invention, the communication control device further comprises a timer circuit operated by a clock signal from a modem in communications protocol process and having a control register which is set to a value under control of said CPU. The timer circuit comprises an up-counter having an arbitrary bit width (n) for operating based on a clock signal from a modem; a time-out register for setting a time-out value of said timer; and a comparator for comparing a count value of said counter with a value of said time-out register and outputting an interrupt signal to said CPU when said count value coincides with said the value of said time-out register.

According to the present invention, since the built-in CPU reads a communications protocol to be used from the outside and then processes the same, the modem can perform a transmission and reception process based on an arbitrary communications protocol.

Since the CPU can respectively set the bit length and the bit pattern of a frame detection signal as well as the number of coincidence detection bits to different communication systems, the frame detection can be carried out in an arbitrary communication system.

Moreover, since the communication control unit has a timer circuit that is operated based on clock pulses for transmission and reception in a modem, the protocol process can be performed according to an arbitrary communication rate decided in a communication system.

A communication control method comprises the steps of externally obtaining an arbitrary communication protocol by means of a CPU; setting a bit length and a bit pattern of a frame detection signal, and the number of coincidence detection bits, according to the arbitrary communication protocol and under control of the CPU; and implementing a process according to the arbitrary communication protocol under control of the CPU.

### BRIEF DESCRIPTION OF THE DRAWINGS

This and other objects, features and advantages of the present invention will become more apparent upon a reading of the following detailed description and drawings, in which:
Fig. 1 is a block diagram illustrating a communication control unit according to the first embodiment of the present invention;
Fig. 2 is a block diagram illustrating a communication control unit according to the second embodiment of the present invention;
Fig. 3 is a block diagram illustrating a frame detection circuit according to the first and second embodiments of the present invention;
Fig. 4 is a block diagram illustrating a coincidence detection circuit shown in Fig. 3; and
Fig. 5 is a block diagram illustrating a timer circuit according to the first and second embodiments.

### DESCRIPTION OF THE EMBODIMENTS

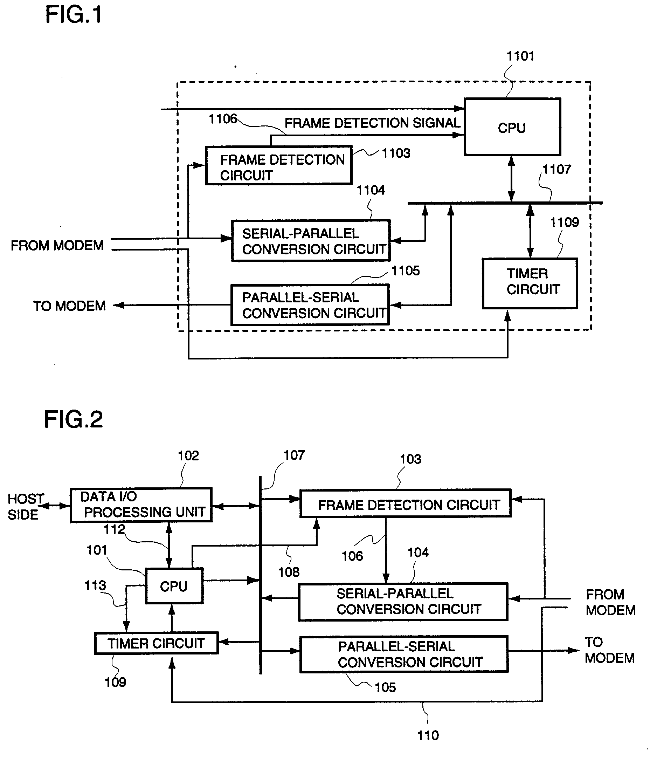

Embodiments of the present invention will be described below in detail with reference to the Figs. 1 to 5. Fig. 1 shows a communication control device according to the first embodiment of the present invention. The communication control device consists of a CPU (Central Processing Unit) 1101, a frame detection circuit 1103, a serial-parallel conversion circuit 1104, a parallel-serial conversion circuit 1105, a timer circuit 1109.

The CPU 1101 sets the bit length, the bit pattern and the number of coincidence detection bits of a frame detection signal, based on a communication protocol, and sets the value of the control register in the timer circuit 1109.

The communication control device processes communication data according to a communication protocol at the time of data transmission. The serial-parallel conversion circuit 1105 converts data into a serial signal and then outputs it to a modem.

When communication data is received, the frame detection circuit 1103 detects a frame among serial signals input from the modem and then outputs a frame detection signal 1106 to the CPU 1101. The serial-parallel conversion circuit 1104 converts a serial signal input from the modem into a parallel signal. The frame detection circuit 1103 and the serial-parallel conversion circuit 1104 are connected to the CPU 1101. In a communication protocol process, the timer circuit 1109 is set to the value of the control register from the CPU in response to the clock signal input from the modem and then informs the CPU of the time-out.

Fig. 2 shows a communication control device according to the second embodiment of the present invention. The communication control device is connected between a modem and a communication host such as a personal computer, a work station, or an information terminal to control data transmission and data reception of the host.

The communication control device consists of a CPU 101, a data I/O processing section 102, a frame detection circuit 103, a serial-parallel conversion circuit 104, a parallel-serial conversion circuit 105, and a timer circuit 109. The data I/O processing section 102 controls control data and communication data exchanged between the host and the CPU 101.

In the communication control device, the data I/O control section 102 imports a communication protocol process program loaded from the host. Then, the CPU reads the program from the data I/O control section 102 via the program read-in line 112 and then runs it. By reading the communication protocol control program loaded from the host, the CPU 101 sets the bit length, the bit pattern, and the number of the coincidence bits of a frame detection signal from the frame detection circuit 103 based on the communication protocol as well as the value of the control register in the timer circuit.

At the time of data transmission, the communication control section processes the communication data input from the host according to the communication protocol previously read. Then, the parallel-serial conversion circuit 105 converts the result into a serial signal and then output it to the modem.

At the time of receiving communication data, the frame detection circuit 103 detects a specific frame among signals input from the modem and then outputs a frame detection signal to the serial-parallel conversion circuit 104. When receiving the frame detection signal 106, the serial-parallel conversion circuit 104 converts the serial signal input from the modem into a parallel signal. Thereafter, the CPU 101 subjects the parallel signal to a protocol process and then outputs the result to the host. The frame detection circuit 103 and the serial-parallel conversion circuit 104 are connected via the data bus 107 of the CPU 101. The frame detection circuit 103 is connected to the write signal line 108 of the CPU 101. The timer circuit 109 is connected to the CPU via the write signal line 113. The timer circuit 109 operates according to the clock signal 110 input from the modem and informs the CPU 101 of time-out via the interrupt signal line 111.

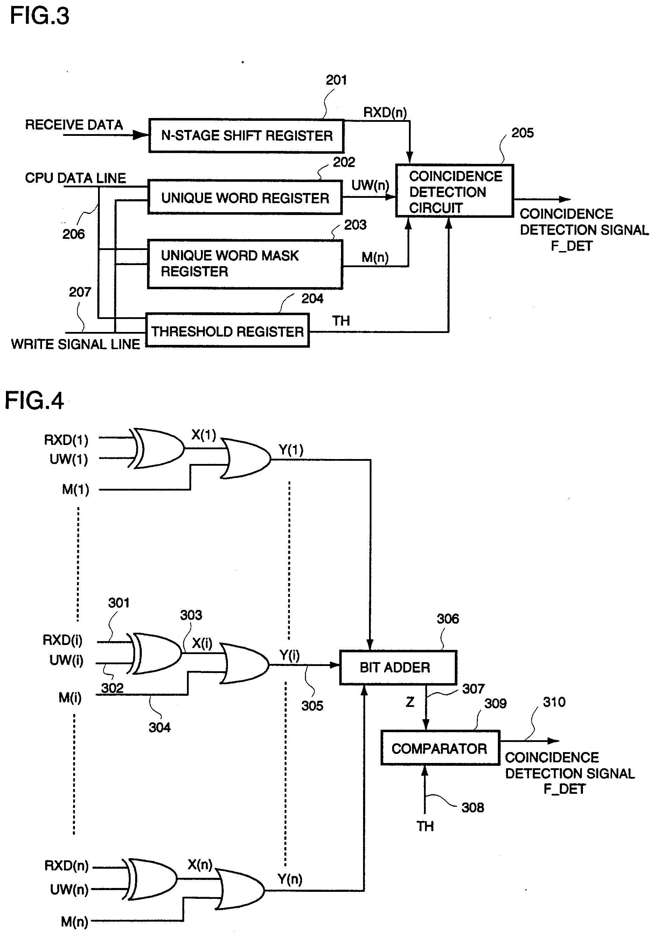

Next, the frame detection circuit 1103 in the first embodiment and the frame detection circuit 103 in the second embodiment will be described with reference to Fig. 3.

The frame detection circuit 1103 or 103 consists of an n-stage shift register 201 with an arbitrary bit width (n), a unique word register 202 with n-bit width for setting a bit pattern for coincidence detection, a unique word mask register 203 with n-bit width for setting a bit location for no bit detection to vary the bit length of a bit pattern for coincidence detection, a threshold register 204 for writing the number of bits for coincidence detection, and the coincidence detection circuit 205 for executing coincidence detection based on the RXD(n)signal from the shift register 201, the UW(n) signal from the unique word register 202, the M(n) signal from the unique word mask register 204, and the TH signal from the threshold register 204 and then outputting a coincidence detection signal.

The CPU is connected to the unique word register 202, the unique word mask register 203, and the threshold register 204 via the data line 206 and the write signal line 207 and can set them to certain values. The unique word register 202 sets a bit pattern UW(n) for coincidence detection. In M(n) to be set to the unique word mask register 203, the bit for coincidence detection is 0 while the bit for no coincidence detection is 1. The number (TH) of coincidence bits for outputting a coincidence detection signal is set to the threshold register 204.

Fig. 4 shows the example of the coincidence detection circuit 205 shown in Fig. 3.

The coincidence detection circuit 205 implements the logical NOT of an exclusive OR of RXD(i)301 and UW(i)302 and produces X(i)303 (where i = 1∼n). When X(i)303 coincides with UW(i)302, X(i) is 1. When X(i)303 does not coincide with UW(i)302, X(i) is 0. A coincidence signal Y(i)305 is obtained by implementing a logical OR of X(i)303 and M(i)304. When M(i) is 0 while RXD(i)301 coincides with UW(i)302, Y(i)305 is 1. When M(i)304 is 1, M(i)305 is always 1 regardless of RXD(i)301 and UW(i)302. Hence, Y(i)305 being a bit which is not subjected to a coincidence detection becomes always 1. The bit adder 306 adds all Y(i)305 and then obtains a coincidence bit number Z307. The comparator 309 compares in size the coincidence bit number Z307 with TH308. When the coincidence bit number Z307 exceeds TH308, the comparator 309 outputs a coincidence detection signal F_DET301.

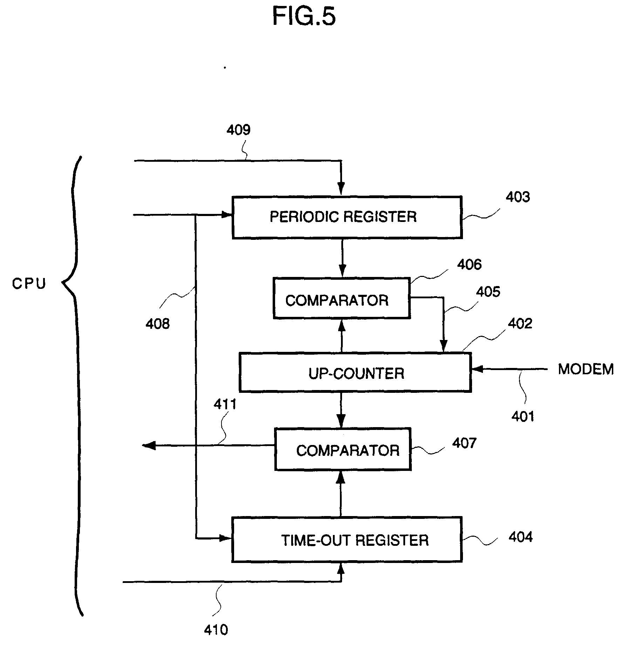

Fig. 5 shows the timer circuit 1109 according to the first embodiment and the timer circuit 109 according to the second embodiment in the communication control device.

The timer circuit consists of an up-counter 402 with an arbitrary bit width (n) that operates on a clock signal 401 from a modem, a periodic register 403 with n-bit width for setting the period of the timer, a time-out register 404 for setting the time-out value of the timer, an n-bit width comparator 406 for comparing the count value of the up-counter 402 with the value of the periodic register 403, and an n-bit width comparator for comparing the count value of the counter 402 with the value of the time-out register 404.

The periodic register 403 is set to a value according to the signal input from the CPU via the data bus 408 and the signal input via the write signal line 409 from the CPU. The time-out register 404 is set to a value according to the signal input from the CPU via the data bus 408 and the signal input from the CPU via the write signal line 410. When the count value of the up-counter 402 coincides with the output signal of the periodic register 403, the comparator 405 outputs a reset signal 404 to reset the count value of the up-counter 402 to 0. When the count value of the up-counter 402 coincides with the output signal of the time-out register 404, the comparator 405 outputs an interrupt signal to the CPU via the interrupt signal line 411.

According to the present invention, communications can be established based on an arbitrary communication protocol and timing control can be performed in bit units corresponding to a communication rate.

## Claims

1. A communication control unit that performs a protocol process based on an arbitrary communications protocol, comprising:
a CPU (Central processing Unit) for implementing a protocol process based on an arbitrary communication protocol; and
a frame detection processing circuit for setting the bit length and the bit pattern of a frame detection signal, and the number of coincidence detection bits, based on said communication protocol and under control of said CPU.

2. The communication control unit of claim 1, further comprising:
an I/O processing section for reading a communications protocol processing program for said arbitrary communication protocol from an external device to said CPU.

3. The communication control unit of claim 1, wherein said frame detection circuit comprises:
a shift register;
a unique word register for setting a bit pattern for a coincidence detection operation;
a unique word mask register for setting a bit location for no bit coincidence detection operation;
a threshold register for writing the number of bits for a coincidence detection operation; and
a coincidence detection circuit for implementing a coincidence detection operation according to an output signal from said shift register, an output signal from said unique word register, an output signal from said unique word mask register and an output signal from said threshold register and outputting a coincidence detection signal.

4. The communication control unit of claim 2, wherein said frame detection circuit comprises:
a shift register;
a unique word register for setting a bit pattern for a coincidence detection operation;
a unique word mask register for setting a bit location for no bit coincidence detection operation;
a threshold register for writing the number of bits for a coincidence detection operation; and
a coincidence detection circuit for implementing a coincidence detection operation according to an output signal from said shift register, an output signal from said unique word register, an output signal from said unique word mask register and an output signal from said threshold register and outputting a coincidence detection signal.

5. A communication control unit that implements a process operation based on a communications protocol, comprising:
a CPU for implementing an arbitrary protocol process; and
an I/O processing section for reading a communications protocol process program for said given communication protocol process from an external device to said CPU.

6. The communication control device of claim 1, further comprising:
a timer circuit operated by a clock signal from a modem in said arbitrary communications protocol and having a control register which is set to a value based on said communications protocol and under control of said CPU; said modem implementing a process operation in response to an arbitrary clock signal for transmission or reception of said modem.

7. The communication control unit of claim 2, further comprising:
a timer circuit operated by a clock signal from a modem in said arbitrary communications protocol and having a control register which is set to a value based on said communications protocol and under control of said CPU; said modem implementing a process operation in response to an arbitrary clock signal for transmission or reception of said modem.

8. The communication control unit of claim 3, further comprising:
a timer circuit operated by a clock signal from a modem in said arbitrary communications protocol and having a control register which is set to a value based on said communications protocol and under control of said CPU; said modem implementing a process operation in response to an arbitrary clock signal for transmission or reception of said modem.

9. The communication control unit of claim 4, further comprising:
a timer circuit operated by a clock signal from a modem in said arbitrary communications protocol and having a control register which is set to a value based on said communications protocol and under control of said CPU; said modem implementing a process operation in response to an arbitrary clock signal for transmission or reception of said modem.

10. The communication control unit of claim 6, wherein said timer circuit comprises:
an up-counter for operating based on a clock signal from a modem;
a time-out register for setting a time-out value of said timer; and
a comparator for comparing a count value of said counter with a value of said time-out register and outputting an interrupt signal to said CPU when said count value coincides with said the value of said time-out register.

11. A communication control method comprising the steps of:
externally obtaining said arbitrary communication protocol by means of a CPU;
setting a bit length and a bit pattern of a frame detection signal, and the number of coincidence detection bits, according to said communication protocol and under control of said CPU; and
implementing a process according to said arbitrary communication protocol under control of said CPU.
